# EUROPÄISCHE PATENTSCHRIFT

(11) **EP 2 955 432 B1**
(45) Veröffentlichungstag und Bekanntmachung des Hinweises auf die Patenterteilung: **04.08.2021**
(21) Anmeldenummer: 15171347.6
(22) Anmeldetag: 10.06.2015
(51) Int. Cl.: F21V 8/00, F21S 43/237, F21S 43/245, F21S 43/251, B60Q 1/00

(54) **BELEUCHTUNGSVORRICHTUNG FÜR FAHRZEUGE**
ILLUMINATION DEVICE FOR VEHICLES
DISPOSITIF D'ECLAIRAGE POUR VEHICULES

(30) Priorität: 11.06.2014 AT 504012014
(43) Veröffentlichungstag der Anmeldung: 16.12.2015
(73) Patentinhaber: ZKW Group GmbH, 3250 Wieselburg (AT)
(72) Erfinder: Faffelberger, Anton, 3375 Krummnußbaum (AT)
(74) Vertreter: Patentanwaltskanzlei Matschnig & Forsthuber OG

(56) Entgegenhaltungen:
- EP-A1- 2 731 824
- DE-A1-102008 034 052
- US-A1- 2008 101 087
- US-A1- 2010 128 490
- US-A1- 2010 278 480
- US-A1- 2011 038 177
- US-A1- 2011 164 190
- US-A1- 2012 275 190
- US-A1- 2012 314 448

## Beschreibung

Die Erfindung betrifft eine Beleuchtungsvorrichtung für Fahrzeuge, insbesondere Kraftfahrzeuge, umfassend zumindest eine Lichtquelle und zumindest eine der zumindest einen Lichtquelle zugeordnete Lichtleiteranordnung zur Führung des von der zumindest einen Lichtquelle abgestrahlten und in die Lichtleiteranordnung eingekoppelten Lichts, wobei die Lichtleiteranordnung einen oder mehrere Lichtleiter umfasst, wobei der zumindest eine Lichtleiter ein oder mehrere Auskopplungsstellen zur Auskoppelung zumindest eines Teils des eingekoppelten Lichtes aufweist, und wobei der zumindest eine Lichtleiter zur Umlenkung des Lichtes zu der zumindest einen Auskoppelungsstelle hin zumindest bereichsweise an einer der zumindest einen Auskopplungsstelle gegenüberliegenden Begrenzungsfläche des Lichtleiters eine Reflexionsstruktur aufweist, wobei die Reflexionsstruktur eine Anzahl an Reflexionsstrukturelementen umfasst, welche Reflexionsstrukturelemente als nach innen, in den Lichtleiter hinein gerichtete Vertiefungen ausgebildet sind, welche derart angeordnet und/oder ausgebildet sind, dass zumindest ein Teil des Lichtstromes, vorzugsweise der gesamte Lichtstrom, der auf eine Strukturelement-Oberfläche, welche das Reflexionsstrukturelement begrenzt, fällt, an der Strukturelement-Oberfläche totalreflektiert wird.

Weiters betrifft die Erfindung einen Fahrzeugscheinwerfer, insbesondere Kraftfahrzeugscheinwerfer mit zumindest einer solchen Beleuchtungsvorrichtung.

Außerdem betrifft die Erfindung ein Fahrzeug, insbesondere Kraftfahrzeug mit zumindest einem solchen Fahrzeugscheinwerfer.

Bei solchen Beleuchtungsvorrichtungen ist beispielsweise vorgesehen, dass anschließend an zumindest eine lichtaustrittsseitig gelegene Begrenzungsfläche des zumindest einen Lichtleiters zumindest ein, vorzugsweise genau ein Optikelement, beispielsweise zumindest eine Dickwandoptik, vorgesehen ist, in welche Licht über die zumindest Lichtauskoppelstelle der Lichtleiteranordnung eingekoppelt wird, welches Licht an zumindest einer Lichtaustrittsfläche des zumindest einen Optikelementes zur Bildung einer Lichtfunktion und/oder einer Lichtverteilung austritt.

Eingangs genannte Beleuchtungsvorrichtungen sind beispielsweise aus der DE102008034052A1, WO2013/008215A1 oder der US2012/0275190A1 bekannt.

Dabei tritt das Problem auf, dass bei einer seitlichen Betrachtung an der Lichtaustrittsfläche des Optikelementes Leuchtdichtehotspots auftreten, die einen unschönen optischen Eindruck erzeugen. Typischerweise tritt dieser Effekt bei einer seitlichen Betrachtung unter ca. 45° und +/- 20° in vertikaler Richtung auf. Bei einer an der Unterseite abgeflachten Kontur des Optikelementes erscheint dabei jeweils die dem Betrachter zugewandte untere Ecke der Lichtaustrittsfläche des Optikelementes sehr hell.

Es ist eine Aufgabe der Erfindung, Leuchtdichtespots wie oben beschrieben zu vermeiden bzw. abzuschwächen.

Diese Aufgabe wird mit einer eingangs erwähnten Beleuchtungsvorrichtung dadurch gelöst, dass erfindungsgemäß die Reflexionsstruktur Auskopplungsmittel zum Auskoppeln zumindest eines Teiles des zwischen den Reflexionsstrukturelementen auf die Reflexionsstruktur auftreffenden Lichtes in eine von der zumindest einen Auskopplungsstelle abgewandte Richtung aufweist, sodass Lichtstrahlen aus dem Lichtleiter nach hinten austreten und nicht mehr zu einem Leuchtdichtespot oder zu Leuchtdichtespots beitragen können, wobei die Auskopplungsmittel als Erhebungen ausgebildet sind, wobei beispielsweise die Erhebungen eine prismatische Form aufweisen bzw. als Prismen ausgebildet sind, welche Erhebungen an der die Reflexionsstruktur aufweisenden Begrenzungsfläche des Lichtleiters, in Bereichen zwischen benachbarten Reflexionsstrukturelementen, von der Begrenzungsfläche nach Außen, von der zumindest einen Auskopplungsstelle wegweisend, angeordnet sind.

Der Begriff "von der Auskopplungsstelle abgewandte Richtung" bedeutet dabei, dass eine Vektorkomponente eines betrachteten Lichtstrahls entgegen der Haupt-Auskoppelrichtung gerichtet ist.

Über die Auskopplungsmittel wird somit Totalreflexion im Bereich der Auskopplungsmittel zumindest für einen Teil der dort auftreffenden Lichtstrahlen unterbunden, Lichtstrahlen können aus dem Lichtleiter nach hinten austreten und können entsprechend nicht mehr zu dem oder den unerwünschten Leuchtdichtespot(s) beitragen, welche dadurch abgeschwächt oder ganz beseitigt werden.

Vorteilhafterweise sind die Reflexionsstrukturelemente in einer Haupt-Lichtführungsrichtung hintereinander und benachbarte Reflexionsstrukturelemente zueinander beabstandet angeordnet sind.

Bei einem Lichtleiter, in den Licht über eine Lichtumlenkeinrichtung eingespeist wird, entspricht die Haupt-Lichtführungsrichtung der (oder den) Haupt-Lichtumlenkrichtung(en).

Durch die Ausformung dieser Erhebungen, beispielsweise in Form von Prismen an der Rückseite des Lichtleiters, vorzugsweise im Nahbereich der Umlenkeinrichtung, wird die Totalreflexion unterbunden, sodass der störende Leuchteindruck bei schräger Betrachtung unterbunden wird. Die Erhebungen sind beispielsweise treppenförmig nach hinten am Lichtleiter aufgebrachte (bzw. einstückig mit diesem ausgebildete) Zusatzflächen und erlauben einen Austritt von unerwünschten Lichtstrahlen nach hinten.

Die Erhebungen derart ausgestaltet und/oder angeordnet, dass zumindest ein Teil des Lichtes, welcher auf eine Erhebungs-Begrenzungsfläche, welche Erhebungs-Begrenzungsfläche jeweils eine Erhebung nach Außen hin begrenzt, auftrifft, über die Erhebungs-Begrenzungsfläche aus dem Lichtleiter austritt.

Bevorzugt sind Lichtleiter und Erhebungen aus demselben Material, insbesondere sind diese vorzugsweise einstückig hergestellt.

Beispielsweise bestehen die Erhebungs-Begrenzungsflächen jeweils aus zwei Begrenzungs-Teilflächen, welche in einer Erhebungskante zusammenlaufen.

Diese Erhebungskanten können fertigungstechnisch bedingt, z.B. bei Herstellung mittels eines Spritzvorganges, leichte Kantenverrundungen aufweisen.

Bei einer konkreten, bevorzugten Ausführungsform ist vorgesehen, dass zumindest eine, vorzugsweise beide, Begrenzungs-Teilflächen als ebene Flächen ausgebildet sind.

Weiters hat es sich als günstig herausgestellt, wenn sich Erhebungen, vorzugsweise alle Erhebungen jeweils über den gesamten Bereich zwischen zwei Reflexionsstrukturelementen erstrecken.

Außerdem ist es günstig, wenn sich Erhebungen, vorzugsweise alle Erhebungen jeweils über im Wesentlichen die gesamte Höhenerstreckung zumindest eines benachbarten Strukturelementes erstrecken.

Unter "Höhenerstreckung" ist dabei die Erstreckung der Reflexionsstrukturelemente quer zu einer Haupt-Lichtführungsrichtung zu verstehen.

Günstig ist es, wenn in einem in einer Haupt-Lichtführungsrichtung gesehen vorderen Bereich der lokale Winkel zwischen Erhebungs-Begrenzungsfläche und der ursprünglichen Begrenzungsfläche des Lichtleiters geringer ist als der Winkel in einem hinteren Bereich der Erhebungs- Begrenzungsfläche.

Jede Erhebungs-Begrenzungsfläche hat einen "Punkt" (tatsächlich im allgemeinen eine Kurve mit Punkten) mit Maximalabstand zu der ursprünglichen Lichtleiter-Begrenzungsfläche - dieser "Punkt" bzw. diese Kurve unterteilt die Erhebungs-Begrenzungsfläche in einen vorderen Bereich und einen hinteren Bereich. "Hinten" und "Vorne" sind in Bezug auf die Haupt-Führungsrichtung zu sehen, d.h. der vordere Bereich ist der Umlenkeinrichtung zugewandt, der hintere Bereich ist der Umlenkeinrichtung abgewandt.

"Lokaler" Winkel bedeutet, dass bei einer gekrümmten Erhebung der Winkel sich entlang der Erhebungs-Begrenzungsfläche verändert. Mit lokal ist der Winkel einer Tangentialebene in einem betrachteten Punkt an die Erhebungs-Begrenzungsfläche zu verstehen.

Bei einer Erhebungs-Begrenzungsfläche, die aus zwei ebenen Teilflächen besteht, weist jede Teilfläche genau einen Winkel auf, der vorzugsweise gemessen wird zwischen der Teilfläche und einer Tangentialebene an den Lichtleiter im Bereich des Schnittpunktes bzw. der Schnittfläche der Teilfläche mit der Rückseite des Lichtleiters. In diesem Fall gilt auch der Zusammenhang "hinterer Bereich = hintere Teilfläche", "vorderer Bereich = vordere Teilfläche".

Vorzugsweise ist vorgesehen, dass in einem in einer Haupt-Lichtführungsrichtung gesehen hinteren Bereich der Erhebungs-Begrenzungsfläche der lokale Winkel zwischen der Erhebungs-Begrenzungsfläche und der ursprünglichen Begrenzungsfläche des Lichtleiters derart gewählt ist, dass zumindest ein Teil des auf den hinteren Bereich der Erhebungs-Begrenzungsfläche auftreffenden Lichtes über den hinteren Bereich der Erhebungs-Begrenzungsfläche aus dem Lichtleiter austritt.

Insbesondere ist es günstig, wenn in dem in einer Haupt-Lichtführungsrichtung gesehen hinteren Bereich der Erhebungs-Begrenzungsfläche der lokale Winkel zwischen der Erhebungs-Begrenzungsfläche und der ursprünglichen Begrenzungsfläche des Lichtleiters derart gewählt ist, dass zumindest ein Teil des auf den hinteren Bereich der Erhebungs-Begrenzungsfläche auftreffenden Lichtes unter einem Winkel auftrifft, welcher kleiner als der Grenz-Winkel für Totalreflexion in dem betrachteten, lokalen Punkt der Erhebungs-Begrenzungsfläche.

Bei einer konkreten Ausführungsform mit einer Erhebungs-Begrenzungsfläche, welche von zwei ebenen Teilflächen gebildet ist, nimmt die vordere Teilfläche einen ersten Winkel zu der ursprünglichen Begrenzungsfläche ein, welcher vorzugsweise in einem Bereich von 12,5° - 40° liegt und/oder die hintere Teilfläche nimmt einen zweiten Winkel zu der ursprünglichen Begrenzungsfläche ein, welcher vorzugsweise in einem Bereich von 70° - 90° liegt.

Weiters ist mit Vorteil noch vorgesehen, dass die Reflexionsstrukturelemente eine prismatische Form aufweisen bzw. als Prismen ausgebildet sind.

Beispielsweise bestehen die Reflexionsstrukturelement-Begrenzungsflächen jeweils aus zwei Begrenzungs-Teilflächen, welche in einer Strukturelementkante zusammenlaufen.

Beispielsweise ist zumindest eine, bzw. sind vorzugsweise beide Reflexionsstrukturelement-Teilflächen als ebene Flächen ausgebildet.

Vorzugsweise ist weiters vorgesehen, dass in einem in einer Haupt-Lichtführungsrichtung gesehen vorderen Bereich der Reflexionsstrukturelement-Begrenzungsfläche der lokale Winkel zwischen der Reflexionsstrukturelement-Begrenzungsfläche und der ursprünglichen Begrenzungsfläche des Lichtleiters derart gewählt ist, dass zumindest ein Teil, vorzugsweise im Wesentlichen der gesamte auf diesen Bereich auftreffende Lichtstrom totalreflektiert und zu zumindest einer Lichtauskoppelstelle umgelenkt wird.

Beispielsweise liegt bei einer vorderen Reflexionsstrukturelement-Begrenzungsfläche, welche eben ausgebildet ist, der Winkel zu der ursprünglichen Begrenzungsfläche in einem Bereich von 40° - 45°.

Weiters ist bevorzugt vorgesehen, dass die Kanten der Reflexionsstrukturelemente und der Erhebungen parallel zueinander verlaufen.

Bevorzugt ist vorgesehen, dass die Reflexionsstrukturelemente, insbesondere die Kanten der Reflexionsstrukturelemente äquidistant angeordnet sind.

Günstig ist es, wenn die Höhe der Reflexionsstrukturelemente, d.h. der Normalabstand der Kanten der Reflexionsstrukturelemente zu der ursprünglichen Begrenzungsfläche, bei einem Fortschreiten entlang des Lichtleiters zunimmt.

Das "Fortschreiten" beginnt bei dem Lichteinkoppelbereich und erfolgt in den Lichtleiter hinein.

Weiters ist vorzugsweise vorgesehen, dass die Höhe der Erhebungen, d.h. der Normalabstand der Kanten der Erhebungen zu der ursprünglichen Begrenzungsfläche, bei einem Fortschreiten entlang des Lichtleiters abnimmt.

Günstig kann es auch sein, wenn die Höhe der Erhebungen in demselben Ausmaß abnimmt, wie die Höhe der Reflexionsstrukturelemente zunimmt.

Wie eingangs schon beschrieben, ist vorzugsweise noch vorgesehen, dass anschließend an zumindest eine lichtaustrittsseitig gelegene Begrenzungsfläche des zumindest einen Lichtleiters zumindest ein, vorzugsweise genau, ein Optikelement, beispielsweise zumindest eine Dickwandoptik, vorgesehen ist, in welche Licht über die zumindest Lichtauskoppelstelle der Lichtleiteranordnung eingekoppelt wird, welches Licht an zumindest einer Lichtaustrittsfläche des zumindest einen Optikelementes zur Bildung einer Lichtfunktion und/oder einer Lichtverteilung austritt.

Im Folgenden ist die Erfindung an Hand der Zeichnung näher erläutert. In dieser zeigt
Fig. 1 eine Beleuchtungsvorrichtung in einer perspektivischen Ansicht von schräg Vorne,
Fig. 2 eine perspektivische Ansicht einer erfindungsgemäßen Lichtleiteranordnung,
Fig. 3 einen bekannte Lichtleiteranordnung in einem Horizontalschnitt,
Fig. 3a eine Detailansicht aus Figur 3 im Bereich der Rückseite des Lichtleiters der Lichtleiteranordnung,
Fig. 4 einen erfindungsgemäße Lichtleiteranordnung in einem Horizontalschnitt, und
Fig. 4a eine Detailansicht aus Figur 4 im Bereich der Rückseite des erfindungsgemäßen Lichtleiters der Lichtleiteranordnung.

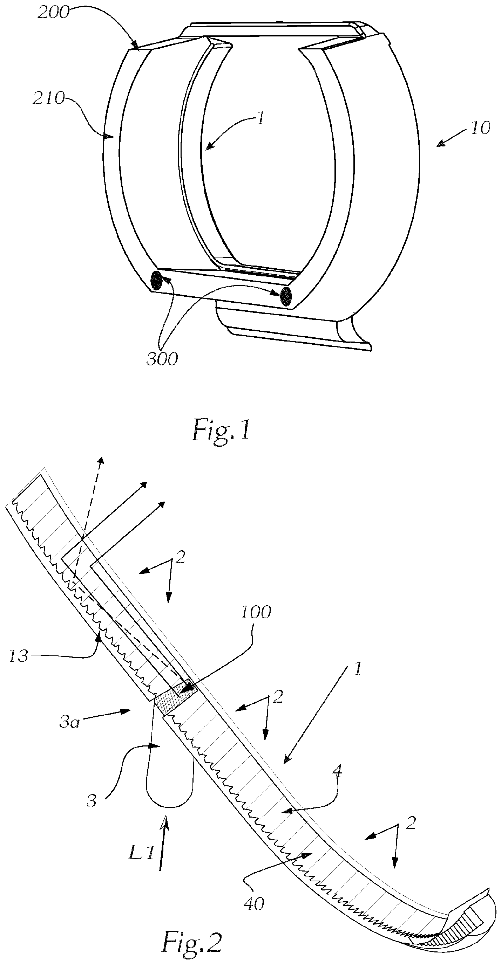

Figur 1 zeigt eine Beleuchtungsvorrichtung 10 für Fahrzeuge, insbesondere Kraftfahrzeuge, welche zumindest eine (nicht dargestellte) Lichtquelle und eine der zumindest einen Lichtquelle zugeordnete, hier nicht im Detail dargestellte Lichtleiteranordnung 1 zur Führung des von der zumindest einen Lichtquelle abgestrahlten und in die Lichtleiteranordnung 1 eingekoppelten Lichts umfasst. Die Lichtleiteranordnung verfügt z.B. über einen Lichtleiter, in welchen Licht von der Lichtquelle über einen Lichteinkoppelbereich eingespeist wird. Beispielsweise kann in dem Lichteinkoppelbereich eine Lichtumlenkeinrichtung, z.B. ein Umlenkprisma angeordnet sein, welche das von der Lichtquelle zugeführte Licht in zwei Richtungen umlenkt und so in zwei Richtungen in den Lichtleiter einkoppelt. Die Erfindung ist allerdings nicht auf eine solche Variante beschränkt.

Anschließend an eine lichtaustrittsseitig gelegene Begrenzungsfläche des Lichtleiters, über welche das Licht ausgekoppelt wird, ist ein Optikelement 200, beispielsweise eine Dickwandoptik vorgesehen ist, in welche Licht über die Lichtauskoppelstelle der Lichtleiteranordnung 1 bzw. des Lichtleiters eingekoppelt wird. Dieses Licht wird an einer Lichtaustrittsfläche 210 des Optikelementes 200 zur Bildung einer Lichtfunktion und/oder einer Lichtverteilung austritt.

Wie eingangs beschrieben, bilden sich bei Verwendung eines aus dem Stand der Technik bekannten Lichtleiters bei seitlicher Betrachtung Leuchtdichtehotspots 300 an der Lichtaustrittsfläche 210 des Optikelementes 200.

Um diese Leuchtdichtehotspots 300 abzuschwächen oder vorzugsweise ganz zu eliminieren, und so auch bei seitlicher Betrachtung ein homogenes Erscheinungsbild des Optikelementes zu gewährleisten, wird eine erfindungsgemäße Lichtleiteranordnung bzw. ein erfindungsgemäßer Lichtleiter wie im Folgen beschrieben verwendet.

Figur 2 zeigt eine erfindungsgemäße Lichtleiteranordnung 1 mit einem Lichtleiter 4, in welchen über eine Zuleitung 3 Licht von zumindest einer, nicht dargestellten, Lichtquelle in Lichteinspeisrichtung L1 eingespeist wird. In dem Lichteinkoppel- bzw. Lichteinspeisbereich 3a ist eine Umlenkeinrichtung 100 schematisch angedeutet, mittels welcher bei der gezeigten, nicht einschränkenden Ausführungsform das eingekoppelte Licht in beide Arme des Lichtleiters 4 eingespeist wird.

Der Lichtleiter 4 weist Auskopplungsstellen 2 zur Auskoppelung zumindest eines Teils des eingekoppelten Lichtes aufweist. Typischerweise handelt es sich bei den Auskoppelungsstellen um im Wesentlichen die gesamte Vorderseite 2 des Lichtleiters, aus welcher Licht austreten kann und in einen Bereich vor der Beleuchtungsvorrichtung bzw. vor dem Fahrzeug abgestrahlt wird.

Zur Umlenkung des Lichtes zu der Vorderseite (Auskopplungsbereich, Auskopplungsstellen) 2 des Lichtleiters weist dieser an der gegenüberliegenden Begrenzungsfläche 40 (im Folgen auch als Rückseite bezeichnet) eine Reflexionsstruktur 5 aufweist, wobei die Reflexionsstruktur 5 eine Anzahl an Reflexionsstrukturelementen 5a umfasst, welche Reflexionsstrukturelemente 5a als nach innen, in den Lichtleiter 4 hinein (d.h. in Richtung der Vorderseite 2) gerichtete Vertiefungen ausgebildet sind. Diese Reflexionsstrukturelementen 5a sind derart angeordnet und/oder ausgebildet sind, dass zumindest ein Teil des Lichtstromes, vorzugsweise der gesamte Lichtstrom, der auf eine Strukturelement-Fläche 5b, 5c, welche das Reflexionsstrukturelement 5 begrenzt, an der Strukturelement-Oberfläche 5b, 5c totalreflektiert wird.

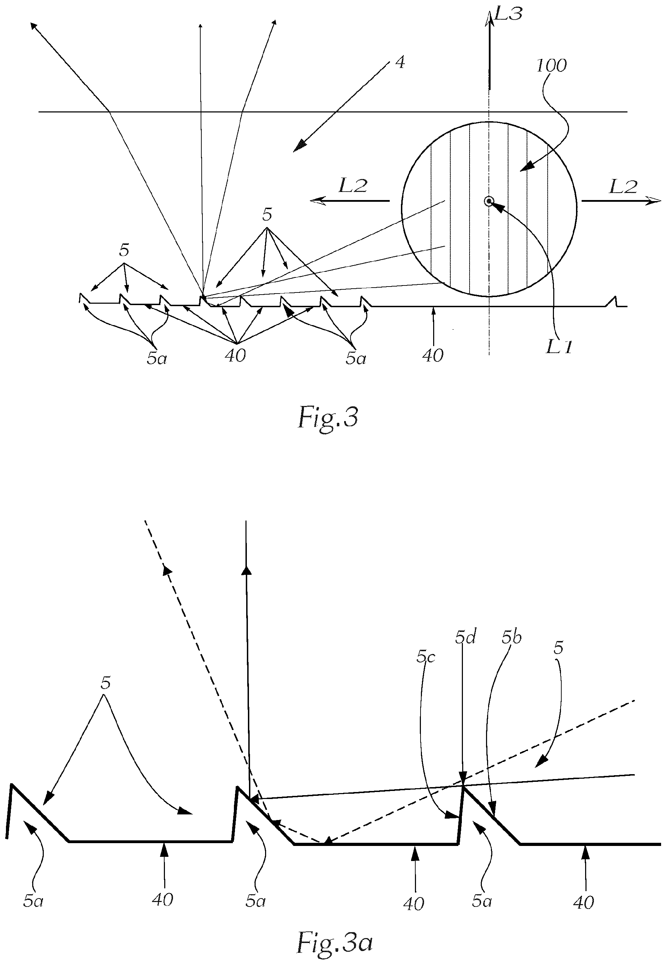

Figur 3 zeigt einen aus dem Stand der Technik bekannten Lichtleiter 4, welcher solche Reflexionsstrukturelementen 5a aufweist, Figur 3a zeigt diese Reflexionsstrukturelementen 5a im Detail. Licht, welches in Richtung L1 (Haupt-Lichteinkoppelrichtung) in den Lichtleiter 4 eingekoppelt wird und in die beiden Richtungen L2 (Haupt-Lichtführungsrichtungen L2) umgelenkt wird, wird an der Rückseite 40 und an den Reflexionsstrukturelementen 5a des Lichtleiters 4 wie gezeigt totalreflektiert und tritt über die Vorderseite 2 aus dem Lichtleiter 4 aus. Bei einem Lichtleiter, in den Licht wie gezeigt über eine Lichtumlenkeinrichtung eingespeist wird, werden die Haupt-Lichtführungsrichtung der (oder den) auch als Haupt-Lichtumlenkrichtung(en) L2 bezeichnet.

Ein Reflexionsstrukturelement 5a wird vorzugsweise wie gezeigt von zwei Strukturelement-Flächen 5b, 5c, die wie gezeigt vorzugsweise eben ausgebildet sind und in einer Kante 5d zusammenlaufen, gebildet. Licht, welches direkt auf die vordere Fläche 5b auftrifft, wird von dieser zur Vorderseite 2 reflektiert, Licht, welches auf die Rückseite 40 des Lichtleiters 4 zwischen zwei Reflexionsstrukturelementen 5a auftrifft, wird dort ebenfalls totalreflektiert und, gegebenenfalls nach weiterer Reflexion an der Fläche 5b, nach vorne abgestrahlt.

Über die Vorderseite 2 tritt Licht in Richtung der Haupt-Lichtauskoppelrichtung L3, welche in der Regel parallel zur Fahrtrichtung des Fahrzeuges, in welchem die Beleuchtungsvorrichtung angeordnet ist, aus und wird in einen Bereich vor dem Fahrzeug abgebildet.

Um die unerwünschten Leuchtdichtespots abzuschwächen oder ganz zu beseitigen, wird nun ein Lichtleiter wie in Figur 3 und 3a gezeigt und wie im Folgenden beschrieben modifiziert.

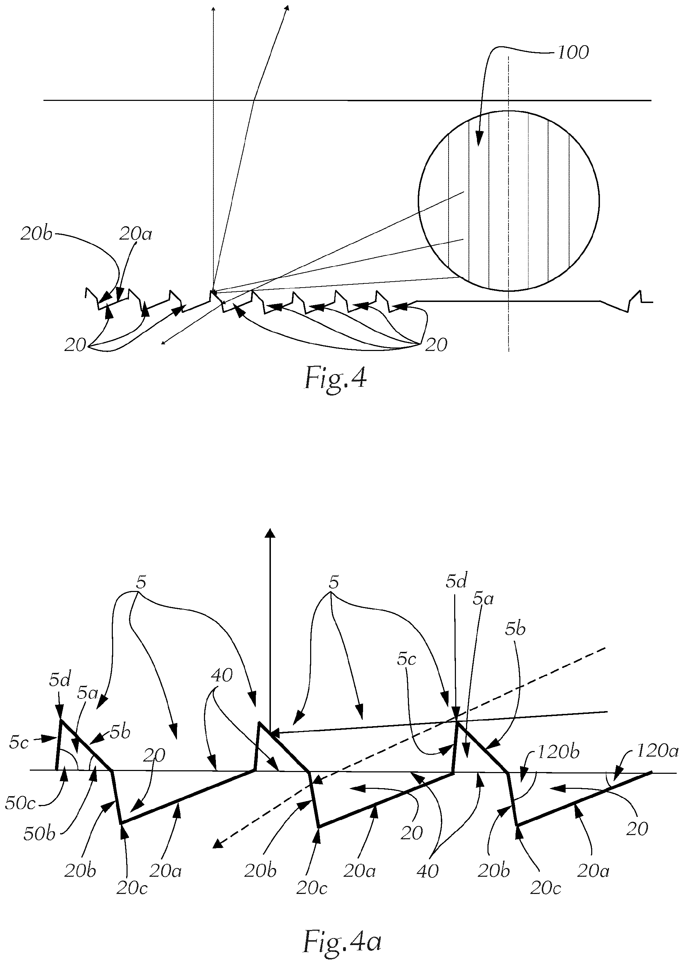

Ein solcher beispielhafter erfindungsgemäßer Lichtleiter ist bereits in Figur 2 und im Detail in Figuren 4, 4a gezeigt. Erfindungsgemäß umfasst bei einem solchen Lichtleiter die Reflexionsstruktur 5 zusätzlich zu den Reflexionsstrukturelementen 5a noch Auskopplungsmittel 20 zum Auskoppeln zumindest eines Teiles des auf die Reflexionsstruktur 5 zwischen den Reflexionsstrukturelementen 5 auftreffenden Lichtes in eine von der Auskopplungsstelle 2 abgewandten Richtung.

Figur 4a zeigt im Detail diese Auskopplungsmittel, und wie zu erkennen ist wird der strichliert dargestellte Lichtstrahl (der gemäß Figur 3a noch totalreflektiert wurde) nicht totalreflektiert und tritt nach hinten aus dem Lichtleiter aus, kann also zur Bildung eines unerwünschten Leuchtdichtespots nicht mehr beitragen.

Über die Auskopplungsmittel wird somit Totalreflexion im Bereich der Auskopplungsmittel zumindest für einen Teil der dort auftreffenden Lichtstrahlen unterbunden, Lichtstrahlen können aus dem Lichtleiter nach hinten austreten und können entsprechend nicht mehr zu dem oder den unerwünschten Leuchtdichtespot(s) beitragen, welche dadurch abgeschwächt oder ganz beseitigt werden.

Bei dem erfindungsgemäßen Lichtleiter 4 sind die Reflexionsstrukturelemente 5a in einer Haupt-Lichtführungsrichtung L2 hintereinander und benachbarte Reflexionsstrukturelemente 5a zueinander beabstandet angeordnet. Die Reflexionsstrukturelemente 5a weisen eine prismatische Form auf bzw. sind als Prismen ausgebildet. Die Reflexionsstrukturelement-Begrenzungsflächen bestehen, wie im Zusammenhang mit Figur 3 und 3a schon erwähnt jeweils aus zwei ebenen Begrenzungs-Teilflächen 5b, 5c, welche in einer Strukturelementkante 5d zusammenlaufen.

Der (lokale) Winkel 50b zwischen der vorderen ebenen Reflexionsstrukturelement-Begrenzungsfläche 5b und der ursprünglichen Begrenzungsfläche 40 des Lichtleiters 4 ist derart gewählt, dass zumindest ein Teil, vorzugsweise im Wesentlichen der gesamte auf diesen Bereich 5b auftreffende Lichtstrom totalreflektiert und zu der Lichtauskoppelstelle (Vorderseite) 2 umgelenkt wird. Beispielsweise liegt dieser Winkel 50b zu der ursprünglichen Begrenzungsfläche 40 in einem Bereich von 40° - 45°. Der Winkel 50c der hinteren Reflexionsstrukturelement-Begrenzungsfläche 5c ist in der Regel, wie gezeigt, größer als der vordere Winkel 50b.

Bevorzugt ist vorgesehen, dass die Reflexionsstrukturelemente 5a, insbesondere die Kanten 5d der Reflexionsstrukturelemente 5a äquidistant angeordnet sind. Günstig ist es auch, wenn die Höhe der Reflexionsstrukturelemente 5a, d.h. der Normalabstand der Kanten 5d der Reflexionsstrukturelemente 5a zu der ursprünglichen Begrenzungsfläche 40, bei einem Fortschreiten entlang des Lichtleiters zunimmt. Das "Fortschreiten" beginnt bei dem Lichteinkoppelbereich und erfolgt in den Lichtleiter hinein.

Die Auskopplungsmittel umfassen eine Anzahl von Erhebungen 20, welche Erhebungen 20 an der die Reflexionsstruktur 5 aufweisenden Begrenzungsfläche 40 des Lichtleiters 4, in Bereichen zwischen benachbarten Reflexionsstrukturelementen 5, von der Begrenzungsfläche 40 nach Außen, von der Auskopplungsstelle 2 wegweisend, angeordnet sind. Zwischen zwei Reflexionsstrukturelementen 5a befindet sich jeweils eine solche Erhebung 20, wobei eine Erhebung 20 vorzugsweise im Wesentlichen den gesamten Bereich zwischen den beiden Strukturelementen 5a einnimmt.

Die Erhebungen 20 sind derart ausgestaltet und/ oder angeordnet, dass zumindest ein Teil des Lichtes, welcher auf eine Erhebungs-Begrenzungsfläche 20a, 20b, welche Erhebungs-Begrenzungsfläche 20a, 20b jeweils eine Erhebung 20 nach Außen hin begrenzt, auftrifft, über die Erhebungs-Begrenzungsfläche 20a, 20b aus dem Lichtleiter 4 austritt, wie dies in Figur 4b an Hand des strichlierten Lichtstrahls schematisch dargestellt ist.

Die Erhebungen 20 weisen vorzugsweise eine prismatische Form aufweisen bzw. sind als Prismen ausgebildet. Konkret sind in der gezeigten Ausführungsform die Erhebungen 20 jeweils aus zwei ebenen Begrenzungs-Teilflächen 20a, 20b begrenzt, welche in einer Erhebungskante 20c zusammenlaufen. Diese Erhebungskanten können fertigungstechnisch bedingt, z.B. bei Herstellung mittels eines Spritzvorganges, leichte Kantenverrundungen aufweisen.

Die Erhebungen 20, vorzugsweise alle Erhebungen 20 erstrecken sich jeweils über im Wesentlichen die gesamte Höhenerstreckung der benachbarten Strukturelemente 5 erstrecken. Unter "Höhenerstreckung" ist dabei die Erstreckung der Reflexionsstrukturelemente quer zu einer Haupt-Lichtführungsrichtung, also die Richtung normal auf die Zeichenebene in Figur 4, 4a zu verstehen.

Der Winkel 120a zwischen einer Erhebungs-Begrenzungsfläche 20a und der ursprünglichen Begrenzungsfläche 40 des Lichtleiters 4 ist vorzugsweise, wie gezeigt geringer als der Winkel 120b zwischen der hinteren Erhebungs-Begrenzungsfläche 20b.

Der Winkel (120b) zwischen der hinteren Erhebungs-Begrenzungsfläche 20b und der ursprünglichen Begrenzungsfläche 40 ist dabei derart gewählt, dass zumindest ein Teil des auf den hinteren Bereich der Erhebungs-Begrenzungsfläche 20b auftreffenden Lichtes über die hintere Erhebungs-Begrenzungsfläche 20b aus dem Lichtleiter 4 austritt.

Dazu ist der Winkel 120b vorzugsweise derart gewählt, dass zumindest ein Teil des auf den hinteren Bereich der Erhebungs-Begrenzungsfläche 20b auftreffenden Lichtes unter einem Winkel auf die Erhebungs-Begrenzungsfläche 20b auftrifft, welcher kleiner als der Grenz-Winkel für Totalreflexion in dem betrachteten, lokalen Punkt der Erhebungs-Begrenzungsfläche 20b.

Beispielsweise liegt der Winkel 120a zwischen einer vorderen Teilfläche 20a und der ursprünglichen Begrenzungsfläche 40 in einem Bereich von 12,5° - 40°, der zweite, "hintere" Winkel 120b liegt vorzugsweise in einem Bereich von 70° - 90°.

Die Kanten 5d der Reflexionsstrukturelemente 5 und die Kanten 20c der Erhebungen 20 verlaufen vorzugsweise parallel zueinander.

Weiters ist vorzugsweise vorgesehen, dass die Höhe der Erhebungen 20, d.h. der Normalabstand der Kanten 20c der Erhebungen 20 zu der ursprünglichen Begrenzungsfläche 40, bei einem Fortschreiten entlang des Lichtleiters abnimmt.

Die Höhe der Erhebungen 20 nimmt dabei vorzugsweise in demselben Ausmaß ab, wie die Höhe der Reflexionsstrukturelemente 5a zunimmt.

## Patentansprüche

1. Beleuchtungsvorrichtung für Fahrzeuge, insbesondere Kraftfahrzeuge, umfassend zumindest eine Lichtquelle und zumindest eine der zumindest einen Lichtquelle zugeordnete Lichtleiteranordnung (1) zur Führung des von der zumindest einen Lichtquelle abgestrahlten und in die Lichtleiteranordnung (1) eingekoppelten Lichts,
wobei die Lichtleiteranordnung (1) einen oder mehrere Lichtleiter (4) umfasst, wobei der zumindest eine Lichtleiter (4) ein oder mehrere Auskopplungsstellen (2) zur Auskoppelung zumindest eines Teils des eingekoppelten Lichtes aufweist, und wobei
der zumindest eine Lichtleiter (4) zur Umlenkung des Lichtes zu der zumindest einen Auskoppelungsstelle (2) hin zumindest bereichsweise an einer der zumindest einen Auskopplungsstelle (2) gegenüberliegenden Begrenzungsfläche (40) des Lichtleiters (4) eine Reflexionsstruktur (5) aufweist, wobei
die Reflexionsstruktur (5) eine Anzahl an Reflexionsstrukturelementen (5a) umfasst, welche Reflexionsstrukturelemente (5a) als nach innen, in den Lichtleiter (4) hinein gerichtete Vertiefungen ausgebildet sind, welche derart angeordnet und/oder ausgebildet sind, dass zumindest ein Teil des Lichtstromes, der auf eine Strukturelement-Oberfläche (5b, 5c), welche das Reflexionsstrukturelement (5) begrenzt, fällt, an der Strukturelement-Oberfläche (5b, 5c) totalreflektiert wird,
**dadurch gekennzeichnet, dass**
die Reflexionsstruktur (5) Auskopplungsmittel (20) zum Auskoppeln zumindest eines Teiles des zwischen den Reflexionsstrukturelementen (5) auf die Reflexionsstruktur (5) auftreffenden Lichtes in eine von der zumindest einen Auskopplungsstelle (2) abgewandte Richtung aufweist, sodass Lichtstrahlen aus dem Lichtleiter nach hinten austreten und nicht mehr zu einem Leuchtdichtespot oder zu Leuchtdichtespots beitragen können, wobei die Auskopplungsmittel als Erhebungen (20) ausgebildet sind, wobei beispielsweise die Erhebungen (20) eine prismatische Form aufweisen bzw. als Prismen ausgebildet sind, welche Erhebungen (20) an der die Reflexionsstruktur (5) aufweisenden Begrenzungsfläche (40) des Lichtleiters (4), in Bereichen zwischen benachbarten Reflexionsstrukturelementen (5a), von der Begrenzungsfläche (40) nach Außen, von der zumindest einen Auskopplungsstelle (2) wegweisend, angeordnet sind.

2. Beleuchtungsvorrichtung nach Anspruch 1, **dadurch gekennzeichnet, dass** die Reflexionsstrukturelemente (5a) in einer Haupt-Lichtführungsrichtung (L2) hintereinander und benachbarte Reflexionsstrukturelemente (5a) zueinander beabstandet angeordnet sind.

3. Beleuchtungsvorrichtung nach Anspruch 1 oder 2, **dadurch gekennzeichnet, dass** die Erhebungen (20) derart ausgestaltet und/oder angeordnet sind, dass zumindest ein Teil des Lichtes, welcher auf eine Erhebungs-Begrenzungsfläche (20a, 20b), welche Erhebungs-Begrenzungsfläche (20a, 20b) jeweils eine Erhebung (20) nach Außen hin begrenzt, auftrifft, über die Erhebungs-Begrenzungsfläche (20a, 20b) aus dem Lichtleiter (4) austritt.

4. Beleuchtungsvorrichtung nach Anspruch 3, **dadurch gekennzeichnet, dass** die Erhebungs-Begrenzungsfläche aus zwei Begrenzungs-Teilflächen (20a, 20b) besteht, welche in einer Erhebungskante (20c) zusammenlaufen, wobei beispielsweise zumindest eine, vorzugsweise beide, Begrenzungs-Teilflächen (20a, 20b) als ebene Flächen ausgebildet sind.

5. Beleuchtungsvorrichtung nach einem der Ansprüche 1 bis 4, **dadurch gekennzeichnet, dass** sich Erhebungen (20), vorzugsweise alle Erhebungen (20) jeweils über den gesamten Bereich zwischen zwei Reflexionsstrukturelementen (5) erstrecken.

6. Beleuchtungsvorrichtung nach einem der Ansprüche 1 bis 5, **dadurch gekennzeichnet, dass** sich Erhebungen (20), vorzugsweise alle Erhebungen (20) jeweils über im Wesentlichen die gesamte Höhenerstreckung zumindest eines benachbarten Strukturelementes (5a) erstrecken.

7. Beleuchtungsvorrichtung nach einem der Ansprüche 1 bis 6, **dadurch gekennzeichnet, dass** in einem in einer Haupt-Lichtführungsrichtung (L2) gesehen vorderen Bereich der lokale Winkel (120a) zwischen Erhebungs-Begrenzungsfläche (20a) und der ursprünglichen Begrenzungsfläche (40) des Lichtleiters (4) geringer ist als der Winkel (120b) in einem hinteren Bereich der Erhebungs-Begrenzungsfläche (20b), wobei vorzugsweise in einem in einer Haupt-Lichtführungsrichtung (L2) gesehen hinteren Bereich der Erhebungs-Begrenzungsfläche (20b) der lokale Winkel (120b) zwischen der Erhebungs-Begrenzungsfläche (20b) und der ursprünglichen Begrenzungsfläche (40) des Lichtleiters (4) derart gewählt ist, dass zumindest ein Teil des auf den hinteren Bereich der Erhebungs-Begrenzungsfläche (20b) auftreffenden Lichtes über den hinteren Bereich der Erhebungs-Begrenzungsfläche (20b) aus dem Lichtleiter (4) austritt.

8. Beleuchtungsvorrichtung nach Anspruch 7, **dadurch gekennzeichnet, dass** in dem in einer Haupt-Lichtführungsrichtung (L2) gesehen hinteren Bereich der Erhebungs-Begrenzungsfläche (20b) der lokale Winkel (120b) zwischen der Erhebungs-Begrenzungsfläche (20b) und der ursprünglichen Begrenzungsfläche (40) des Lichtleiters (4) derart gewählt ist, dass zumindest ein Teil des auf den hinteren Bereich der Erhebungs-Begrenzungsfläche (20b) auftreffenden Lichtes unter einem Winkel auftrifft, welcher kleiner als der Winkel für Totalreflexion in dem betrachteten, lokalen Punkt der Erhebungs-Begrenzungsfläche (20b).

9. Beleuchtungsvorrichtung nach Anspruch 7 oder 8, **dadurch gekennzeichnet, dass** bei einer Erhebungs-Begrenzungsfläche, welche von zwei ebenen Teilflächen (20a, 20b) gebildet ist, die vordere Teilfläche (20a) einen ersten Winkel (120a) zu der ursprünglichen Begrenzungsfläche (40) einnimmt, welcher vorzugsweise in einem Bereich von 12,5° - 40° liegt, und/oder die hintere Teilfläche (20b) einen zweiten Winkel (120b) zu der ursprünglichen Begrenzungsfläche (40) einnimmt, welcher vorzugsweise in einem Bereich von 70° - 90° liegt.

10. Beleuchtungsvorrichtung nach einem der Ansprüche 1 bis 9, **dadurch gekennzeichnet, dass** die Reflexionsstrukturelemente (5) eine prismatische Form aufweisen bzw. als Prismen ausgebildet sind.

11. Beleuchtungsvorrichtung nach einem der Ansprüche 1 bis 10, **dadurch gekennzeichnet, dass** Reflexionsstrukturelement-Begrenzungsflächen jeweils aus zwei Begrenzungs-Teilflächen (5b, 5c) bestehen, welche in einer Strukturelementkante (5d) zusammenlaufen, wobei zumindest eine, vorzugsweise beide Reflexionsstrukturelement-Teilflächen (5b, 5c) als ebene Flächen ausgebildet sind.

12. Beleuchtungsvorrichtung nach Anspruch 11, **dadurch gekennzeichnet, dass** in einem in einer Haupt-Lichtführungsrichtung (L2) gesehen vorderen Bereich der Reflexionsstrukturelement-Begrenzungsfläche (5b) der lokale Winkel (50b) zwischen der Reflexionsstrukturelement-Begrenzungsfläche (5b) und der ursprünglichen Begrenzungsfläche (40) des Lichtleiters (4) derart gewählt ist, dass zumindest ein Teil, vorzugsweise im Wesentlichen der gesamte auf diesen Bereich (5b) auftreffende Lichtstrom totalreflektiert und zu zumindest einer Lichtauskoppelstelle (2) umgelenkt wird, wobei vorzugsweise bei einer vorderen Reflexionsstrukturelement-Begrenzungsfläche (5b), welche eben ausgebildet ist, der Winkel (50b) zu der ursprünglichen Begrenzungsfläche (40) in einem Bereich von 40° - 45° liegt.

13. Beleuchtungsvorrichtung nach Anspruch 11 oder 12, **dadurch gekennzeichnet, dass** die Kanten (5d) der Reflexionsstrukturelemente (5a) und der Erhebungen (20c) parallel zueinander verlaufen.

14. Beleuchtungsvorrichtung nach einem der Ansprüche 1 bis 13, **dadurch gekennzeichnet, dass** die Reflexionsstrukturelemente (5a), insbesondere die Kanten (5d) der Reflexionsstrukturelemente (5) äquidistant angeordnet sind.

15. Beleuchtungsvorrichtung nach einem der Ansprüche 1 bis 14, **dadurch gekennzeichnet, dass** die Höhe der Reflexionsstrukturelemente (5a), d.h. der Normalabstand der Kanten (5d) der Reflexionsstrukturelemente (5a) zu der ursprünglichen Begrenzungsfläche (40), bei einem Fortschreiten entlang des Lichtleiters zunimmt.

16. Beleuchtungsvorrichtung nach einem der Ansprüche 1 bis 15, **dadurch gekennzeichnet, dass** die Höhe der Erhebungen (20), d.h. der Normalabstand der Kanten (20c) der Erhebungen (20) zu der ursprünglichen Begrenzungsfläche (40), bei einem Fortschreiten entlang des Lichtleiters abnimmt.

17. Beleuchtungsvorrichtung nach Anspruch 15 und Anspruch 16, **dadurch gekennzeichnet, dass** die Höhe der Erhebungen (20) in demselben Ausmaß abnimmt, wie die Höhe der Reflexionsstrukturelemente (5a) zunimmt.

18. Beleuchtungsvorrichtung nach einem der Ansprüche 1 bis 17, **dadurch gekennzeichnet, dass** anschließend an zumindest eine lichtaustrittsseitig gelegene Begrenzungsfläche (2) des zumindest einen Lichtleiters (4) zumindest ein, vorzugsweise genau ein, Optikelement (200), beispielsweise zumindest eine Dickwandoptik, vorgesehen ist, in welche Licht über die zumindest Lichtauskoppelstelle (2) der Lichtleiteranordnung (1) eingekoppelt wird, welches Licht an zumindest einer Lichtaustrittsfläche (210) des zumindest einen Optikelementes (200) zur Bildung einer Lichtfunktion und/oder einer Lichtverteilung austritt.

19. Fahrzeugscheinwerfer, insbesondere Kraftfahrzeugscheinwerfer mit zumindest einer Beleuchtungsvorrichtung nach einem der Ansprüche 1 bis 18.

20. Fahrzeug, insbesondere Kraftfahrzeug mit zumindest einem Fahrzeugscheinwerfer nach Anspruch 19.

## Claims

1. Illumination device for vehicles, in particular motor vehicles, comprising at least one light source and at least one light guide arrangement (1) associated with the at least one light source and configured to guide light emitted by the at least one light source and coupled into the light guide arrangement (1),
wherein the light guide arrangement (1) comprises one or more light guides (4), the at least one light guide (4) comprising one or more decoupling location (2) for decoupling at least a part of the light coupled in, and wherein
the at least one light guide (4) comprises, in at least in a region of a boundary surface (40) of the light guide (4) located opposite the at least one decoupling location (2), a reflection structure (5) for deflecting the light towards the at least one decoupling location (2), wherein
the reflection structure (5) comprises a number of reflection structure elements (5a), which reflection structure elements (5a) are formed as depressions directed inwards into the light guide (4), which depressions are arranged and/or formed in such a way that at least a part of the luminous flux incident on a structure element surface (5b, 5c) bounding the reflection structure element (5) is totally reflected at the structure element surface (5b, 5c),
**characterised in that**
the reflection structure (5) includes decoupling means (20) configured to decouple at least part of the light incident on the reflection structure (5) between the reflection structure elements (5) into a direction facing away from the at least one decoupling location (2), so that light rays emerge from the light guide backwards and can no longer contribute to a luminance spot or to luminance spots, the decoupling means being formed as elevations (20), wherein, for example, the elevations (20) have a prismatic shape or are formed as prisms, which elevations (20) are arranged on a boundary surface (40) of the light guide (4) comprising the reflection structure (5), in regions between adjacent reflection structure elements (5a) and facing outwards from the boundary surface (40), away from the at least one decoupling point (2).

2. Illumination device according to claim 1, **characterised in that** the reflection structure elements (5a) are arranged along a main light guiding direction (L2) one behind the other, and adjacent reflection structure elements (5a) are arranged at a distance from each other.

3. Illumination device according to claim 1 or 2, **characterised in that** the elevations (20) are shaped and/or arranged such that at least a part of the light incident on an elevation boundary surface (20a, 20b), which elevation boundary surface (20a, 20b) outwardly bounds a respective elevation (20), emerges from the light guide (4) through the elevation boundary surface (20a, 20b).

4. Illumination device according to claim 3, **characterised in that** the elevation boundary surface consists of two boundary partial surfaces (20a, 20b) which meet at an elevation edge (20c), wherein for example at least one, preferably both, of the boundary partial surfaces (20a, 20b) are realised as flat surfaces.

5. Illumination device according to any one of claims 1 to 4, **characterised in that** elevations (20), preferably all elevations (20), each extend across the entire respective range between two reflection structure elements (5).

6. Illumination device according to any one of claims 1 to 5, **characterised in that** elevations (20), preferably all elevations (20), each extend over substantially the entire height extension of at least one adjacent structural element (5a).

7. Illumination device according to any one of claims 1 to 6, **characterised in that** in a front region as seen along a main light guiding direction (L2), the local angle (120a) between elevation boundary surface (20a) and the original boundary surface (40) of the light guide (4) is smaller than the angle (120b) in a rear region of the elevation boundary surface (20b), wherein preferably in a rear region of the elevation boundary surface (20b) as seen along a main light guiding direction (L2), the local angle (120b) between the elevation boundary surface (20b) and the original boundary surface (40) of the light guide (4) is selected such that that at least a part of the light incident on the rear region of the elevation boundary surface (20b) emerges from the light guide (4) through the rear region of the elevation boundary surface (20b).

8. Illuminating device according to claim 7, **characterised in that**, in the rear region of the elevation boundary surface (20b) as seen in a main light guiding direction (L2), the local angle (120b) between the elevation boundary surface (20b) and the original boundary surface (40) of the light guide (4) is selected such that at least a part of the light incident on the rear region of the elevation boundary surface (20b) is incident at an angle which is smaller than the angle for total reflection in the respective local point of the elevation boundary surface (20b).

9. Illumination device according to claim 7 or 8, **characterised in that** at an elevation boundary surface formed by two flat partial surfaces (20a, 20b), the front partial surface (20a) assumes a first angle (120a) to the original boundary surface (40), which preferably is in a range of 12.5° - 40°, and/or the rear partial surface (20b) assumes a second angle (120b) to the original boundary surface (40), which preferably is in a range of 70° - 90°.

10. Illumination device according to any one of claims 1 to 9, **characterised in that** the reflection structure elements (5) have a prismatic shape or are formed as prisms.

11. Illumination device according to any one of claims 1 to 10, **characterised in that** reflection structure element boundary surfaces each consist of two boundary partial surfaces (5b, 5c) which meet at a structure element edge (5d), wherein at least one, preferably both reflection structure element partial surfaces (5b, 5c) are realised as flat surfaces.

12. Illumination device according to claim 11, **characterised in that**, in a front region of the reflection structure element boundary surface (5b) as seen along a main light guiding direction (L2), the local angle (50b) between the reflection structure element boundary surface (5b) and the original boundary surface (40) of the light guide (4) is selected such that at least a part of, preferably substantially the entire, luminous flux incident on this region (5b) is totally reflected and deflected to at least one light decoupling location (2), wherein preferably in the case of a front reflection structure element boundary surface (5b) realized planar, the angle (50b) to the original boundary surface (40) is in a range of 40° - 45°.

13. Illumination device according to claim 11 or 12, **characterised in that** the edges (5d) of the reflection structure elements (5a) and of the elevations (20c) are parallel to each other.

14. Illumination device according to any one of claims 1 to 13, **characterised in that** the reflection structure elements (5a), in particular the edges (5d) of the reflection structure elements, (5) are arranged equidistantly.

15. Illumination device according to any one of claims 1 to 14, **characterised in that** the height of the reflection structure elements (5a), i.e., the normal distance of the edges (5d) of the reflection structure elements (5a) from the original boundary surface (40), is increasing while progressing along the light guide.

16. Illumination device according to any one of claims 1 to 15, **characterised in that** the height of the elevations (20), i.e. the normal distance of the edges (20c) of the elevations (20) from the original boundary surface (40), is decreasing while progressing along the light guide.

17. Illumination device according to claim 15 and claim 16, **characterised in that** the height of the protrusions (20) is decreasing with the same extent as the height of the reflection structure elements (5a) is increasing.

18. Illumination device according to any one of claims 1 to 17, **characterised in that** at least one, preferably exactly one optical element (200), for example at least one thick-walled optical element, is provided adjoining at least one boundary surface (2) located on the light exit side of the at least one light guide (4), light being coupled into said at least on optical element through the at least light decoupling location (2) of the light guide arrangement (1), which light emerges at at least one light output surface (210) of the at least one optical element (200) so as to form a light function and/or a light distribution.

19. Vehicle headlamp, in particular motor vehicle headlamp comprising at least one lighting device according to any one of claims 1 to 18.

20. Vehicle, in particular motor vehicle, comprising at least one vehicle headlamp according to claim 19.

## Revendications

1. Dispositif d'éclairage pour véhicules, en particulier pour véhicules automobiles, comprenant au moins une source de lumière et au moins un dispositif de guidage de lumière (1) associé à ladite au moins une source de lumière pour guider la lumière émise par ladite au moins une source de lumière et couplé dans le dispositif de guidage de lumière (1),
dans lequel le dispositif de guidage de lumière (1) comporte un ou plusieurs guides de lumière (4), ledit au moins un guide de lumière (4) a un ou plusieurs endroits de découplage (2) pour découpler au moins une partie de la lumière couplée, et
ledit au moins un guide de lumière (4) ayant une structure de réflexion (5) au moins dans une région d'une surface de délimitation (40) du guide de lumière (4) opposée audit au moins un endroit de découplage (2) pour dévier la lumière vers ledit au moins un endroit de découplage (2),
la structure de réflexion (5) comprenant un nombre d'éléments de structure de réflexion (5a), lesquels éléments de structure de réflexion (5a) sont conçus comme des dépressions dirigées vers l'intérieur dans le guide de lumière (4), lesquelles dépressions sont disposées et/ou conçues de telle sorte qu'au moins une partie du flux lumineux incident sur une surface d'élément de structure (5b, 5c) qui délimite l'élément de structure de réflexion (5) est totalement réfléchie au niveau de la surface d'élément de structure (5b, 5c),
**caractérisé en ce que**
la structure de réflexion (5) comprend des moyens de découplage (20) pour découpler au moins une partie de la lumière incidente sur la structure de réflexion (5) et entre les éléments de structure de réflexion (5) dans une direction s'éloignant dudit au moins un endroit de découplage (2), de sorte que des rayons lumineux sortent vers l'arrière du guide de lumière et ne peuvent plus contribuer à une tache de luminance ou à des taches de luminance,
lesdits moyens de découplage étant formés comme des saillies (20), lesdites saillies (20) ayant, par exemple, une forme prismatique ou étant formées comme des prismes, lesquelles saillies (20) sont disposées sur une surface de délimitation (40) du guide de lumière (4) ayant la structure de réflexion (5), dans des zones entre les éléments de structure de réflexion adjacents (5a), orientées vers l'extérieur de la surface de délimitation (40), en s'éloignant dudit au moins un endroit de découplage (2).

2. Dispositif d'éclairage selon la revendication 1, **caractérisé en ce que** les éléments de structure de réflexion (5a) sont disposés les uns derrière les autres dans une direction principale de guidage de la lumière (L2), les éléments de structure de réflexion adjacents (5a) étant disposés à distance les uns des autres.

3. Dispositif d'éclairage selon la revendication 1 ou 2, **caractérisé en ce que** les saillies (20) sont conçues et/ou disposées de telle sorte qu'au moins une partie de la lumière incidente sur une surface de délimitation de saillie (20a, 20b), ladite surface de délimitation de saillie (20a, 20b) délimitant respectivement une saillie (20) vers l'extérieur, sort du guide de lumière (4) via la surface de délimitation de saillie (20a, 20b).

4. Dispositif d'éclairage selon la revendication 3, **caractérisé en ce que** la surface de délimitation de saillie se compose de deux surfaces partielles de délimitation (20a, 20b) qui convergent en un bord de saillie (20c), et par exemple, au moins une des surfaces partielles de délimitation (20a, 20b), de préférence les deux, étant formées comme des surfaces planes.

5. Dispositif d'éclairage selon l'une quelconque des revendications 1 à 4, **caractérisé en ce que** des saillies (20), de préférence toutes les saillies (20), s'étendent chacune sur toute la surface entre deux éléments de structure de réflexion (5).

6. Dispositif d'éclairage selon l'une quelconque des revendications 1 à 5, **caractérisé en ce que** des saillies (20), de préférence toutes les saillies (20), s'étendent chacune sur sensiblement toute l'extension en hauteur d'au moins un élément structurel adjacent (5a).

7. Dispositif d'éclairage selon l'une quelconque des revendications 1 à 6, **caractérisé en ce que**, dans une région avant telle que vue dans une direction principale de guidage de la lumière (L2), l'angle local (120a) entre la surface de délimitation de saillie (20a) et la surface de délimitation (40) initiale du guide de lumière (4) est inférieur à l'angle (120b) dans une région arrière de la surface de délimitation de saillie (20b), et de préférence, dans une région arrière de la surface de délimitation de saillie (20b) vue dans une direction principale de guidage de la lumière (L2), l'angle local (120b) entre la surface de délimitation de saillie (20b) et la surface de délimitation (40) initiale du guide de lumière (4) est sélectionné de telle sorte qu'au moins une partie de la lumière incidente sur la région arrière de la surface de délimitation de saillie (20b) sort du guide de lumière (4) via la région arrière de la surface de délimitation de saillie (20b).

8. Dispositif d'éclairage selon la revendication 7, **caractérisé en ce que**, dans la région arrière de la surface de délimitation de saillie (20b) telle que vue dans une direction principale de guidage de la lumière (L2), l'angle local (120b) entre la surface de délimitation de saillie (20b) et la surface de délimitation (40) initiale du guide de lumière (4) est choisi tel qu'au moins une partie de la lumière incidente sur la région arrière de la surface de délimitation de saillie (20b) est incidente à un angle inférieur à l'angle de réflexion totale au point local de la surface de délimitation de saillie (20b) en question.

9. Dispositif d'éclairage selon la revendication 7 ou 8, **caractérisé en ce que**, quant à une surface de délimitation de saillie qui est formée par deux surfaces partielles planes (20a, 20b), la surface partielle avant (20a) fait un premier angle (120a) avec la surface de délimitation initiale (40), qui se situe de préférence dans une plage de 12,5° à 40°, et/ou la surface partielle arrière (20b) fait un deuxième angle (120b) avec la surface de délimitation initiale (40), qui se situe de préférence dans une plage de 70° à 90°.

10. Dispositif d'éclairage selon l'une quelconque des revendications 1 à 9, **caractérisé en ce que** les éléments de structure de réflexion (5) ont une forme prismatique ou sont formés comme des prismes.

11. Dispositif d'éclairage selon l'une quelconque des revendications 1 à 10, **caractérisé en ce que** les surfaces de délimitation d'éléments de structure de réflexion se composent chacune de deux surfaces partielles de délimitation (5b, 5c) qui convergent en un bord d'élément de structure (5d), et au moins une des surfaces partielles d'éléments de structure de réflexion (5b, 5c), de préférence les deux, étant conçue (s) comme des surfaces planes.

12. Dispositif d'éclairage selon la revendication 11, **caractérisé en ce que**, quant à une région avant de la surface de délimitation de l'élément de structure de réflexion (5b) telle que vue dans une direction principale de guidage de la lumière (L2), l'angle local (50b) entre la surface de délimitation de l'élément de structure de réflexion (5b) et la surface de délimitation (40) initiale du guide de lumière (4) est sélectionné de telle sorte qu'au moins une partie, de préférence sensiblement la totalité, du flux lumineux incident sur cette région (5b) est totalement réfléchie et déviée vers au moins un endroit de couplage de sortie de lumière (2), et de préférence, quant à une surface de délimitation d'élément de structure de réflexion frontale (5b), qui est plane, l'angle (50b) par rapport à la surface de délimitation (40) initiale se situe dans une plage de 40° à 45°.

13. Dispositif d'éclairage selon la revendication 11 ou 12, **caractérisé en ce que** les bords (5d) des éléments de structure de réflexion (5a) et les saillies (20c) sont parallèles les uns aux autres.

14. Dispositif d'éclairage selon l'une quelconque des revendications 1 à 13, **caractérisé en ce que** les éléments de structure de réflexion (5a), en particulier les bords (5d) des éléments de structure de réflexion (5), sont disposés de manière équidistante.

15. Dispositif d'éclairage selon l'une quelconque des revendications 1 à 14, **caractérisé en ce que** la hauteur des éléments de structure de réflexion (5a), c'est-à-dire la distance normale des bords (5d) des éléments de structure de réflexion (5a) par rapport à la surface de délimitation (40) initiale, augmente en progressant le long du guide de lumière.

16. Dispositif d'éclairage selon l'une quelconque des revendications 1 à 15, **caractérisé en ce que** la hauteur des saillies (20), c'est-à-dire la distance normale des bords (20c) des saillies (20) par rapport à la surface de délimitation (40) initiale, diminue en progressant le long du guide de lumière.

17. Dispositif d'éclairage selon la revendication 15 et la revendication 16, **caractérisé en ce que** la hauteur des saillies (20) diminue dans la même mesure que la hauteur des éléments de structure de réflexion (5a) augmente.

18. Dispositif d'éclairage selon l'une quelconque des revendications 1 à 17, **caractérisé en ce que**, contigu à au moins une surface de délimitation (2) dudit au moins un guide de lumière (4) situé du côté de la sortie de la lumière, au moins un, de préférence exactement un élément optique (200), par exemple au moins un élément optique à paroi épaisse, est prévu, dans lequel de la lumière est couplée via ledit au moins un endroit de couplage de sortie de lumière (2) du dispositif de guidage de lumière (1), laquelle lumière sort au niveau d'au moins une surface de sortie de lumière (210) de l'au moins un élément optique (200) pour former une fonction de lumière et/ou une distribution de lumière.

19. Projecteur de véhicule, notamment projecteur de véhicule automobile, comprenant au moins un dispositif d'éclairage selon l'une quelconque des revendications 1 à 18.

20. Véhicule, notamment véhicule automobile, comportant au moins un phare de véhicule selon la revendication 19.
